(19) Europäisches Patentamt
European Patent Office
Office européen des brevets

(11) EP 3 035 564 A1

(12) EUROPEAN PATENT APPLICATION

(43) Date of publication:
22.06.2016 Bulletin 2016/25

(51) Int Cl.:
*H04B 10/60* (2013.01)  *H04L 27/26* (2006.01)

(21) Application number: 14307101.7

(22) Date of filing: 19.12.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ALCATEL LUCENT
92100 Boulogne-Billancourt (FR)

(72) Inventor: Bülow, Henning
70435 Stuttgart (DE)

(74) Representative: 2SPL Patentanwälte PartG mbB
Postfach 15 17 23
80050 München (DE)

Remarks:
Amended claims in accordance with Rule 137(2)
EPC.

(54) **Preprocessing and detection for nonlinear Fourier transform based Optical receiver**

(57) Maximum Likelihood detection of optical signals modulated using a nonlinear Fourier transform (NFT). Said NFT outputs both a continuous real spectral component and discrete complex spectral components (representing both the soliton's amplitude and frequency). This application focuses on the so-called Maximum Likelihood Nonlinear Spectrum detection for both the continuous spectrum modulation case or the more common discrete spectrum components modulation (N-solitons transmission). Said detection uses candidate reference waveforms which are dynamically updated based on previous detection (for example by averaging).

Fig. 2

EP 3 035 564 A1

**Description**

Embodiments described in the following relate to receivers, methods and computer programs for a receiver, preferably to receivers comprised by an optical communication system with an optical communication channel.

Background

This section introduces aspects that may be helpful in facilitating a better understanding of the present disclosure. Accordingly, the statements of this section are to be read in this light and are not to be understood as admissions about what is in the prior art or what is not in the prior art.

Optical fibers are widely used in fiber-optic communications, where they may permit transmission over longer distances and at higher bandwidths or data rates than wire cables. Fibers are used for a variety of applications, including sensors and fiber lasers. They are in some cases used instead of metal wires because signals may travel along them with less loss and are also less prone to some error sources, for example electromagnetic interference. Today the maximum bit-rate which can be transported over an optical fiber of a given length is limited by the nonlinearity of the fiber. An increase of the optical power which should allow the transportation of more information bits in a given spectral range introduces nonlinear distortion. Fiber nonlinearities may arise from several mechanisms. One mechanism that may be detrimental for optical communications arises from the refractive index of glass being dependent on the optical power going through the material (Kerr effect) inducing signal distortion such as four wave mixing (FWM), self-phase modulation (SPM), cross-phase modulation (XPM). Further mechanisms causing nonlinearities in fiber optic systems include stimulated Brillouin scattering (SBS), stimulated Raman scattering (SRS), and intermodulation. Fiber nonlinearities may impose a fundamental limit to the amount of data that can be transmitted on a single optic fiber. On a receiver side these nonlinearities may lead to complex digital signal processing (DSP) steps that may be required to retrieve an originally transmitted signal from a received signal. An approach to overcome the high complexity of receiver sided DSP equalization based on split-step Fourier transform are detection schemes working with nonlinear Fourier transform (NFT). These detection schemes may be based on a comparison of the received signal with a number of reference signals representing hypotheses for an originally transmitted signal. However, due to nonlinearity effects or signal distortion, received signal and reference signals may deviate from each other to an amount, which may complicate a reliable detection of the originally transmitted signal.

It is hence desirable to improve matching between a reference signal and a received signal for a transmit signal detection process.

Summary

Some simplifications may be made in the following summary, which is intended to highlight and introduce some aspects of the various exemplary embodiments, but such simplifications are not intended to limit the scope of embodiments. Detailed descriptions of a preferred exemplary embodiment adequate to allow those of ordinary skill in the art to make and use the inventive concepts will follow in later sections.

According to a first aspect, embodiments provide a receiver. The receiver comprises a transform module configured to transform a received time domain signal to a spectral receive signal. The receiver further comprises a detection module configured to detect a transmit signal based on a comparison of the spectral receive signal with at least one of a plurality of hypothetical spectral receive signals. A hypothetical spectral receive signal corresponds to a respective hypothetical transmit signal. The receiver also comprises an update module configured to update a hypothetical spectral receive signal of the plurality based on at least one previous spectral receive signal that led to a detection of the transmit signal corresponding to the hypothetical spectral receive signal. This may lead to a better agreement between a signal hypothesis and a signal actually received by the receiver. In other words, information related to distortion effects affecting previous transmissions may be memorized and taken into account in future evaluation of the actually received signal.

In some embodiments the spectral receive signal comprises one or more complex frequencies. The update module is further configured to update a portion of the hypothetical spectral receive signal corresponding to one or more complex frequencies in the upper or lower complex half-plane based on at least one previous spectral receive signal portion corresponding to one or more complex frequencies in the upper or lower complex half-plane that led to a detection of the transmit signal corresponding to the hypothetical spectral receive signal.

In one or more embodiments the update module is configured to update a portion of the hypothetical spectral receive signal corresponding to one or more complex frequencies in the upper or lower complex half-plane based on a mean value of at least two previous spectral receive signal portions corresponding to one or more complex frequencies in the upper or lower complex half-plane that led to a detection of the transmit signal corresponding to the hypothetical spectral receive signal.

In some embodiments the receiver further comprises a storage module. The storage module is configured to store an information related to the at least one previous spectral receive signal that led to a detection of the transmit signal corresponding to the hypothetical spectral receive signal.

In one or more embodiments the update module is configured to receive at least one previous spectral receive signal portion corresponding to one or more complex frequencies in the upper or lower complex half-plane that led to a detection of the transmit signal corresponding to the hypothetical spectral receive signal. Therein, the at least one previous spectral receive signal portion comprises a previously updated hypothetical spectral receive signal.

In some embodiments the update module is configured to receive at least one previous spectral receive signal portion corresponding to one or more complex frequencies in the upper or lower complex half-plane that led to a detection of the transmit signal corresponding to the hypothetical spectral receive signal as a predetermined value.

In one or more embodiments the transform module is configured to transform the received time domain signal to the spectral receive signal using a nonlinear Fourier transform.

In some embodiments the detection module is further configured to detect the transmit signal as the respective hypothetical transmit signal based on an Euclidean distance between the spectral receive signal and an updated hypothetical spectral receive signal corresponding to the respective hypothetical transmit signal.

In some embodiments the receiver further comprises a reception interface configured to receive the time domain signal.

In one embodiment the reception interface is coupled to an optical transmission channel. Therein, the received time domain signal is an optical signal.

According to a further aspect, it is provided a method for a receiver. The method comprises a transforming of a received time domain signal to a spectral receive signal. The method further comprises a detecting of a transmit signal based on a comparison of the spectral receive signal with at least one of a plurality of hypothetical spectral receive signals. A hypothetical spectral receive signal corresponds to a respective hypothetical transmit signal. The method also comprises an updating of a hypothetical spectral receive signal of the plurality based on at least one previous spectral receive signal that led to a detection of the transmit signal corresponding to the hypothetical spectral receive signal. An agreement between a signal hypothesis and a signal actually received by the receiver may thus be improved, using previously occurring distortion effects that have affected previous transmissions. Higher exactness in receiver-sided signal detection may hence be achieved.

Some embodiments comprise a computer readable storage medium storing instructions which, when executed by a computer, cause the computer to implement the method described herein, or a digital control circuit installed within the apparatus for performing the method. Such a digital control circuit, e.g. a digital signal processor (DSP), needs to be programmed accordingly. Hence, yet further embodiments also provide a computer program having a program code for performing embodiments of the method, when the computer program is executed on a computer or a digital processor.

Brief description of the Figures

Some embodiments of apparatuses and/or methods will be described in the following by way of example only, and with reference to the accompanying figures, in which

Fig. 1        shows a block diagram of calculation steps of a nonlinear Fourier transformation according to a conventional solution;

Fig. 2        shows a further block diagram of a signal detection scheme according to a conventional solution;

Fig. 3        shows a receiver according to an embodiment;

Fig. 4        shows an diagram visualizing a method of an update of a hypothetical receive signal, according to an embodiment;

Fig. 5a, b and c    illustrate 2D and 3D visualizations of calculated and received complex frequency domain signals, according to embodiments;

Fig. 6        shows a flow chart of a method for a receiver according to an embodiment;

Fig. 7        shows a signal transformation circuitry according to an embodiment;

Fig. 8        shows a signal transformation circuitry according to another, more detailed embodiment;

Fig. 9 shows a flow chart of a method for a signal transformation circuitry according to an embodiment; and

Figs. 10a and b show a calculation scheme for a Darboux transform.

Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

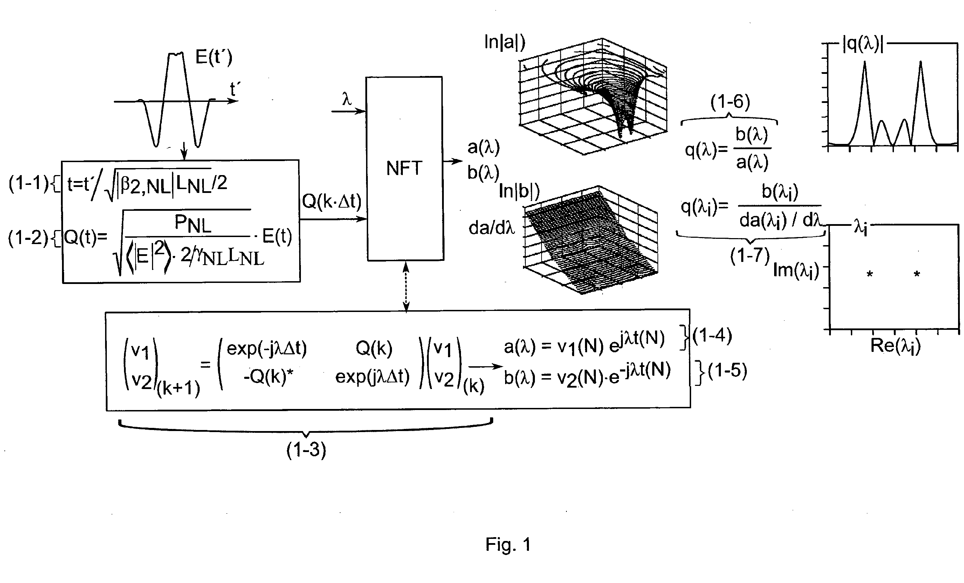

Fig. 1 provides an overview of mathematical operations comprised by a nonlinear Fourier transform (NFT) according to a conventional solution. E(t') is a coherently detected optical signal, wherein t' is a time-related variable. Due to the abovementioned effects of nonlinearity the detected signal undergoes distortion, which is resolved by transforming into the nonlinear frequency domain. This transformation comprises different steps. First the time t' is transformed to a modified temporal variable t via equation (1-1), and signal E(t') to a modified signal Q(t) via eq. (1-2). Therein, $\beta_{2,NL}$ denotes a dispersion coefficient of an ideal fiber channel, $\gamma_{NL}$ a nonlinear coefficient of the fiber channel, $L_{NL}$ a length of the fiber channel, and $P_{NL}$ a mean signal power.

The NFT input parameters comprise frequency $\lambda$ at which the spectral amplitude q shall be calculated or the existence of a discrete frequency point $\lambda_i$ shall be evaluated and samples of the modified signal Q(t) at sampling points t=k·$\Delta$t, wherein k denotes an index number running from 0 to N and small $\Delta$t is a time interval. The NFT is performed according to an iterative principle with k running from 0 to N which is described in eq. (1-3) and is known as the Ablowitz-Ladik method. A signal vector ($v_1$, $v_2$) for iteration step k+1 may be obtained from a preceding signal vector ($v_1$, $v_2$) for iteration step k. From the two elements $v_1$ and $v_2$ of this vector obtained after the iteration step N, two spectral coefficients a($\lambda$) and b($\lambda$) may be obtained using eq. (1-4) and (1-5), respectively, with $j = \sqrt{-1}$ being the complex number. The logarithms of a($\lambda$) and b($\lambda$) are shown as three-dimensional contour plots in the center of Fig.1. Inserting a($\lambda$) and b($\lambda$) in eq. (1-6) leads to the amplitudes q($\lambda$) of the continuous spectrum for continuous frequencies $\lambda$ along the real axis of the complex plane and q($\lambda_j$) at the discrete frequency points. The term "continuous spectrum" herein refers to signal or amplitude values assigned to a frequency $\lambda$ having an imaginary part equal to zero, or lying on the real axis. Correspondingly, the term "discrete frequency points" refers to frequency points $\lambda_j$ having a non-zero imaginary value.

The nonlinear Schrödinger equation (NLSE)

$$j\frac{\partial E}{\partial z'} - \frac{\beta_2}{2}\frac{\partial^2 E}{\partial t'^2} + j\gamma \, E \cdot |E|^2 = 0 \qquad (1)$$

describes the propagation of the slow varying complex field envelope E(t',z') of a wave in a lossless optical fiber ($\alpha$=0dB/km) with the instantaneous Kerr nonlinearity coefficient $\gamma$ and group velocity dispersion dispersion coefficient $\beta_2$. 1.32-$W^{-1}km^{-1}$ and -22-$ps^2$ are typical values for $\gamma$ and $\beta_2$, respectively, belonging to a standard single mode fiber (SSMF) with zero loss and a dispersion coefficient of D = 17-ps/nm/km. Normalization of this equation is obtained by defining a characteristic time To= -$\beta_2 L_{NL}$/2 and characteristic power Po = 2/($\gamma L_{NL}$) corresponding to a dispersion length and a nonlinear length $L_{NL}$ both equal to the length of the fiber link. In addition, since the power of the received optical field E(t) may be considered as unknown, it is denoted by $P_{NL}$ and regarded as a NFT transformation parameter which has to be defined. With this the NLSE for a lossless fiber with GVD in normalized form

$$j\frac{\partial q}{\partial z}+\frac{\partial^2 q}{\partial t^2}+2q\cdot|q|^2 = 0$$

is obtained. Therein, the field E with assumed power $P_{NL}$ is normalized by Po and yields the normalized field envelope q(t)

$$q(t) = \sqrt{P_{NL}\cdot\gamma_{NL}L_{NL}/2}\cdot E(t)\Big/\Big\langle|E|^2\Big\rangle \quad,$$

the time t' is normalized to To and the length coordinate z is running from 0 to 1 along the fiber of length $L_{NL}$, wherein

$$t = t'\Big/\sqrt{|\beta_{2,NL}|L_{NL}/2} \qquad\qquad z = z'/L_{NL} \quad.$$

Opposite to the conventional linear Fourier transformation where the waveform E(t') with its average power P=$\langle|E|^2\rangle$ is sufficient to determine the spectrum E($\omega$), the NFT requires the channel parameter $\beta_{2,NL}$ and $\gamma_{NL}$ in addition. Moreover, following the Ablowitz-Ladik method, the complex spectral amplitude q($\lambda$) at a frequency point $\lambda$ is determined in three computational steps. Firstly, the vector v = ($v_1$ $v_2$)$^T$ is iteratively determined by walking in small steps $\Delta$t along the normalized time domain signal Q(t) = q(t)·$\Delta$t

$$\begin{pmatrix} v_1 \\ v_2 \end{pmatrix}_{(k+1)} = A_{(k)}\begin{pmatrix} v_1 \\ v_2 \end{pmatrix}_{(k)}$$

with

$$A_{(k)} = \left(1+|Q(k)|^2\right)^{-1}\begin{pmatrix} \exp(-j\lambda\Delta t) & Q(t_{(k)}) \\ -Q(t_{(k)})^* & \exp(j\lambda\Delta t) \end{pmatrix}$$

with the start vector v'(k=0) = (1 0)$^T$ · exp(-j$\lambda$t$_{(0)}$).
Then, secondly, after having moved through the signal Q(t$_{(k)}$) by t$_{(k)}$=t$_0$+k·$\Delta$t (k=0...N) in steps $\Delta$t, the spectral coefficients a($\lambda$) and b($\lambda$) are determined using the vector v(k=N):

$$a(\lambda) = v_1(N)\cdot e^{j\lambda t(N)} \qquad \text{and} \qquad b(\lambda) = v_2(N)\cdot e^{-j\lambda t(N)} \quad.$$

Thirdly, the spectral amplitude q($\lambda$) is determined by the ratio of the spectral coefficients:

$$q_c(\lambda) = \frac{b(\lambda)}{a(\lambda)}.$$

The discrete frequency points may be found by applying a search on zeros of $|a(\lambda)|$ using a Newton-Raphson update, the calculation of $q(\lambda_i)$ needs an extension of (1-3). The discrete amplitude

$$q(\lambda_i) = \frac{b(\lambda_i)}{da(\lambda_i)/d\lambda}$$

demands the knowledge of $da/d\lambda$, which requires a vector element $v_1'(N)$ which is obtained by a further calculation

$$\begin{pmatrix} v_1' \\ v_2' \end{pmatrix}_{(k+1)} = A'_{(k)} \begin{pmatrix} v_1 \\ v_2 \end{pmatrix}_{(k)} + A_{(k)} \begin{pmatrix} v_1' \\ v_2' \end{pmatrix}_{(k)}$$

performed in parallel to the iteration of $v(N)$ with the matrix

$$A'_{(k)} = \begin{pmatrix} -j\Delta t \exp(-j\lambda\Delta t) & 0 \\ 0 & j\Delta t \exp(j\lambda\Delta t) \end{pmatrix}$$

already described above. As starting value for the iteration $v'(k=0) = (-jt_{(0)}\ 0)^T \cdot \exp(-j\lambda t_{(0)})$ may be taken. The matrix $A(k)$ denotes the matrix of (1-3):

$$A_{(k)} = \left(1 + |Q(k)|^2\right)^{-1} \begin{pmatrix} \exp(-j\lambda\Delta t) & Q(t_{(k)}) \\ -Q(t_{(k)})^* & \exp(j\lambda\Delta t) \end{pmatrix}.$$

It is to be noted that the first factor in this product is a normalization (not shown in (1-3)) and may lead to a better numerical accuracy of the iteration with k=1...N.

In an NFT based receiver samples of the coherently detected optical signal E(t') are transformed into two parts of a nonlinear spectrum. A first part is a continuous part which is the amplitude $q_c(\lambda)$ over the nonlinear frequency $\lambda$ (see upper right drawing in Fig.1), and can be obtained from eq. (1-6). The continuous part corresponds to a real part of the frequency spectrum. A second part is a discrete part of the spectrum which are isolated nonlinear frequency points $\lambda_j$ in the upper complex plane (see lower right drawing in Fig.1) with the amplitude $q_d(\lambda_j)$. The frequency points $\lambda_j$ are often referred to as eigenvalues. The frequency points, if existing, may be found by a zero search of the spectral coefficient $a(\lambda)$ for $\lambda$ in the complex plane. The corresponding amplitude $q_d(\lambda_j)$ may be obtained from eq. (1-7) using the derivative of $a(\lambda)$ by frequency $\lambda$ according to the aforementioned calculation rules.

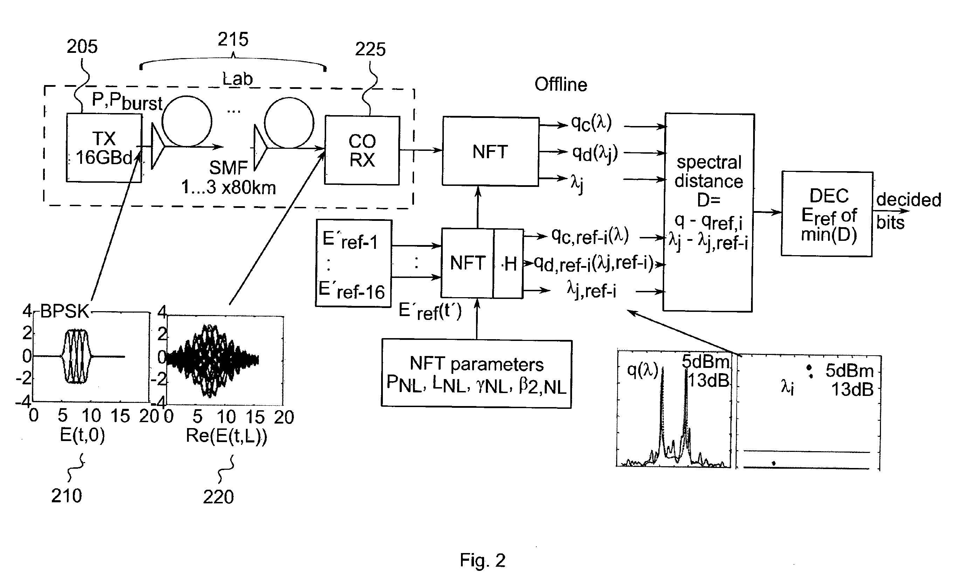

Fig. 2 schematically displays a signal detection scheme as is conventionally done in a maximum likelihood nonlinear detection process. A transmitter 205 sends a transmit signal 210 (E(t,0)) through an optical fiber 215, which in an example has a length between 80 and 240 km. Transmit signal 210 undergoes notable distortion while passing fiber 215, and is received as a receive signal 220 (Re(E(t,L))) by a receiver 225.

Receive signal 220 is transformed with the NFT described in Fig. 1. A multitude of expected signals $E_{ref,1}$ ... $E_{ref,N}$ is transformed likewise, wherein in the nonlinear frequency domain propagation is described by multiplication with the allpass-like transfer function $H(\lambda) = \exp(-4j\cdot\lambda^2\cdot z/L)$. The NFT in both cases uses the optical fiber parameters $\beta_{2,NL}$, $\gamma_{NL}$, $L_{NL}$, and $P_{NL}$. Thus, the continuous frequency domain signal $q_c(\lambda)$, the discrete frequency domain signal $q_d(\lambda_j)$, and discrete frequency point $\lambda_j$, as well as a multitude of hypothetical continuous frequency domain signals $q_{c,Ref-i}(\lambda)$, hypothetical discrete frequency domain signals $q_{d,ref-i}(\lambda_{j,ref-i})$, and discrete frequency point $k_{j,refi}$ can be obtained. The received continuous spectrum and frequency point are compared with each hypothetical continuous spectrum and frequency point, which results in a differential value called the spectral distance D. From the multitude of results for D, with each result corresponding to a distinct hypothetical signal, the minimum value of all D decides which hypothetical signal is most likely corresponding to the original transmit signal 210. Or, in other words, in a receiver deciding on the received signal by maximum likelihood nonlinear spectrum (ML-NS) detection, as shown in Fig.2, the decision is drawn if the received signal spectrum q is close to a reference spectrum $q_{ref}$, i.e. the mean difference of the continuous spectrum $<(q_c-q_{c,ref-i})^2>$, is minimum or of the discrete frequency points $\Sigma_j(\lambda_j-\lambda_{j,ref-i})^2$ is minimum or of the discrete amplitudes $<(q_d(\lambda_j)-q_{d,ref-i}(\lambda_{j,ref-i}))^2>$ at these discrete frequency points $(\lambda_{j,ref-i})$ is minimum or a combination of two or three of these three mean differences is minimum.

However, as can be seen from the right bottom inset in Fig.2, calculated (big dot) and received (small dots) discrete frequency points $(\lambda_j)$ may deviate to some extent. In some cases, an even stronger deviation may be observed for the amplitudes $q_d(\lambda_j)$ and $q_{d,ref-i}(\lambda_{j,ref-i})$ at these points.

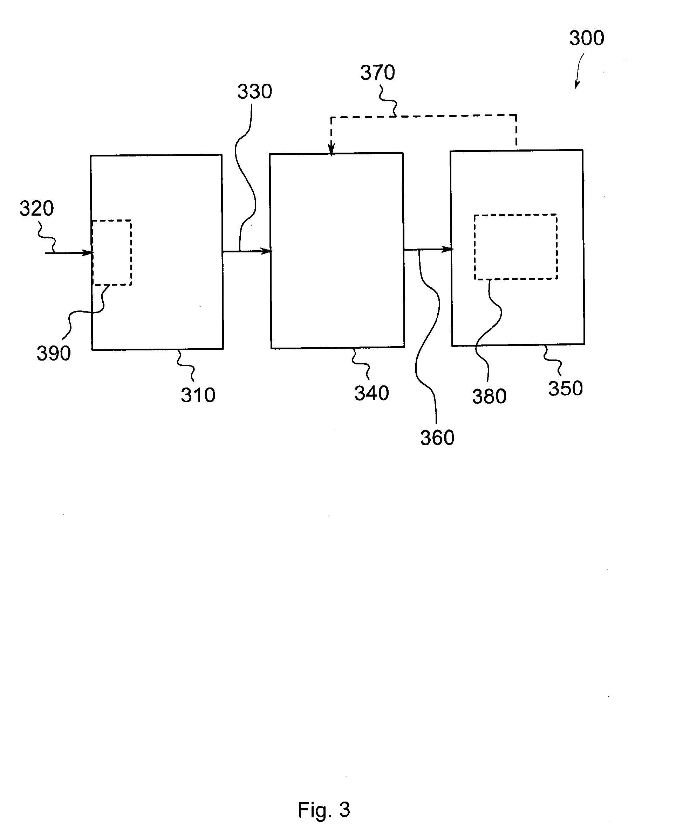

Embodiments may provide an approach to reduce these deviations. Fig. 3 shows an exemplary embodiment of a receiver 300. Receiver 300 comprises a transform module 310 configured to transform a received time domain signal 320 to a spectral receive signal 330. Receiver 300 further comprises a detection module 340 configured to detect a transmit signal based on a comparison of the spectral receive signal 330 with at least one of a plurality of hypothetical spectral receive signals. A hypothetical spectral receive signal, or each hypothetical spectral receive signal corresponds to a respective hypothetical transmit signal. Receiver 300 also comprises an update module 350 configured to update a hypothetical spectral receive signal of the plurality based on at least one previous spectral receive signal 360 that led to a detection of the transmit signal corresponding to the hypothetical spectral receive signal.

Received time-domain signal 320 may comprise a real- or complex-valued amplitude plotted against time. Transformation may convert time domain signals into frequency domain. Hence, spectral receive signal 330 (or also previous spectral receive signal 360) may be a complex frequency domain signal comprising a real- or complex-valued amplitude plotted against complex-valued frequency. That is to say, complex frequency domain signal may comprise one or more couples of values, each couple formed by a complex frequency and a real- or complex-valued amplitude assigned to each other.

Receiver 300 may be coupled to an optical transmission channel, e.g. an optical fiber, and hence received time domain signal 320 may be an optical signal. In other embodiments, received time domain signal 320 may also be an electronic signal, and receiver 300 may comprise for example an interface for a wire-bound connection or an antenna. Transform module 310, detection module 340 and update module 350 may in a different embodiment be implemented as a common physical unit, for instance a microprocessor or any other programmable hardware component, or also comprise one another. Receiver 300 may further exhibit a reception interface 390 to receive time domain signal 320. Received time domain signal 320 may correspond to signal E(t') as explained in Fig. 1. Using the depicted receiver, a better agreement between a signal hypothesis and a signal actually received by the receiver may possibly be accomplished. That is, information related to distortion effects affecting previous transmissions may be memorized and taken into account in future evaluation of the actually received signal. This may lead to higher exactness in receiver-sided signal detection.

In some embodiments, received time domain signal 320 is transformed to spectral receive signal 330 using a nonlinear Fourier transform. Alternatively, other mathematical methods, like fast Fourier transform or discrete Fourier transform may possibly be used. Spectral receive signal 330 may be described in frequency-domain, and comprise a real-valued frequency domain signal $q_c(\lambda)$ (in the following denominated as a continuous frequency domain signal), a complex-valued discrete frequency domain signal $q_d(\lambda_j)$ (in the following denominated as a discrete frequency domain signal), and a complex-valued (also denominated discrete) frequency point $\lambda_j$. These frequency points $\lambda_j$ may resemble eigenvalues related to the transformation. In an embodiment relating to optical signals the frequency points $\lambda_j$ may indicate a soliton, e.g. propagating through an optical fiber. A soliton may be a wave, a wave packet or a pulse that maintains its shape while it travels at constant speed. Solitons may be caused by a cancellation of nonlinear and dispersive effects in a medium.

A hypothetical spectral receive signal may correspond to or comprise one or more of the reference signals $q_{c,ref-i}(\lambda)$, $q_{a,ref-j}(\lambda_j)$, and $\lambda_{j,ref-i}$ (compare Fig. 2). Spectral receive signal 330 may be compared to a multitude of such reference signals, and a decision may be made by detection module 340, for example by finding a minimum Euclidean distance between a specific reference signal value $\lambda_{j,ref-i}$ and a value $\lambda_j$ related to spectral receive signal 330. The Euclidean distance may be a calculable number value for a spatial distance in complex space. Spectral receive signal 330 may be identified as a transmit signal corresponding to the reference signal exhibiting the minimum Euclidean distance to value $\lambda_j$. Such a decision may have been made previously, and the respective reference signal may be resembled by (previous) spectral receive signal 360 that led to a detection of the transmit signal corresponding to the hypothetical spectral receive signal.

Previous spectral receive signal 360 may be available to update module 350 for further use. In some embodiments receiver 300 may comprise a storage module 380 to store an information related to previous spectral receive signal 360. Storage module 380 may optionally be comprised by update module 350, as is shown in Fig.3. Previous spectral receive signal 360 may be used to update the corresponding reference signal or hypothetical spectral receive signal, and an updated hypothetical spectral receive signal 370 may result. In Fig. 3, updated hypothetical spectral receive signal 370 may be provided to detection module 340 by update module 350.

As can be seen from the middle part of Fig. 2, the discrete part of the reference spectra, i.e. amplitudes $q_{d,ref-i}$ and discrete frequency points $\lambda_{j,ref-i}$, may be calculated by multiplication of the transmitter spectra with an all pass filter H. In some embodiments a decision directed adaptation of the complex frequencies $\lambda_{j,ref-i}$ and of the amplitudes (phase and magnitude) $q_{d,ref,i}(\lambda_{j,ref-i})$ is applied. In one or more embodiments spectral receive signal 330 comprises one or more complex frequencies $\lambda_j$. Update module 350 is further configured to update a portion of the hypothetical spectral receive signal corresponding to one or more complex frequencies $k_{j,ref-i}$ in the upper or lower complex half-plane based on at least one portion of previous spectral receive signal 360 corresponding to one or more complex frequencies in the upper or lower complex half-plane that led to a detection of the transmit signal corresponding to the hypothetical spectral receive signal. In other words, for a detection of the transmit signal, the complex frequencies $\lambda_j$ of spectral receive signal 330 and $k_{j,ref-i}$ of the hypothetical spectral receive signal may be used for a comparison. The complex frequency $\lambda_{j,ref-i}$ may be updated using another complex frequency $\lambda_{ji,ref-i}$ of previous spectral receive signal 360

In one or more embodiments update module 350 is configured to update a portion of the hypothetical spectral receive signal corresponding to one or more complex frequencies $\lambda_{i,ref}$ in the upper or lower complex half-plane based on a mean value of at least two previous spectral receive signal portions corresponding to one or more complex frequencies $\lambda_{j,ref-i}$ (j may be an index number to differentiate between different complex frequencies) in the upper or lower complex half-plane that led to a detection of the transmit signal corresponding to the hypothetical spectral receive signal. In other words, there may have been a number of N decisions in the past that led to an identification of received time domain signal 320 as a signal corresponding to one specific hypothesis. The last, or a selection of the last N decisions (k=1....N) with the decision result i may be used to calculate the mean values for complex frequencies and amplitudes of updated hypothetical spectral receive signal 370 via:

$$\lambda_{j,ref-i} = 1/N * \Sigma_k(\lambda_j),$$

$$q_{d,ref-i}(\lambda_j) = 1/N * \Sigma_k (q_d(\lambda_j)).$$

Here $\lambda_j$ and $q_d(\lambda_j)$) is an element of a set of N passed received spectra which were decided as i. The average over these received discrete spectra is used as update of the reference spectrum $k_{j,ref-i}$ and $q_{d,ref-i}(\lambda_j)$ which will be used for future decisions. In one example there are 16 different signal hypotheses (labeled i=1...16) and for each hypothesis i the index j may assume different values j=1 or j=1...2 depending on how many frequency points (eigenvalues) belong to the set of frequency points (eigenvalue pattern) i, wherein k=1...N.

It may further be possible in a further embodiment to update the signal hypotheses i=1...16 of the continuous spectra, e.g. $q_{c,ref-i}(\lambda)$ using a mean value of a number of N passed received spectra. The mean value may be calculated as

$$q_{c,ref-i}(\lambda) = 1/N * \Sigma_k (q_c(\lambda)).$$

Embodiments may thus introduce an approach involving decision directed training for the discrete frequency points $\lambda_j$. These points may however not be viewed or treated as constellation points in some exemplary embodiments. In these embodiments a transmitted signal burst (or, correspondingly, spectral receive signal 330) may exhibit more than one point at a time, as is e.g. visualized by the two points in the complex planes in Fig.2 (bottom right panel).

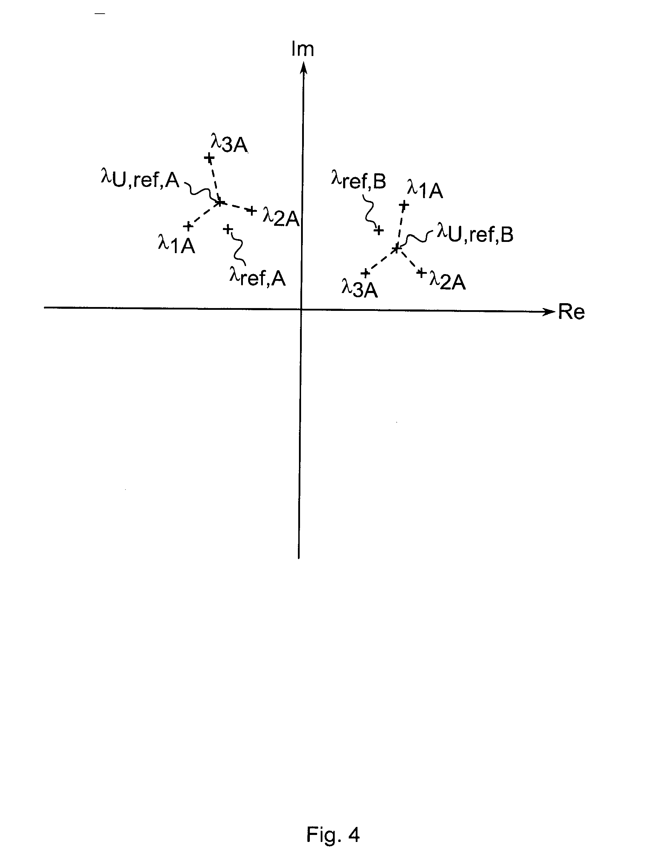

Fig. 4 visualizes an exemplary process for an update of a hypothetical receive signal exhibiting two complex frequency points in a complex coordinate system, which are labeled $\lambda_{ref,A}$ and $\lambda_{ref,B}$ herein. A first set of complex frequency points $\lambda_{1A}$, $\lambda_{1B}$ of a first spectral receive signal, a second set of complex frequency points $\lambda_{2A}$, $\lambda_{2B}$ of a second spectral receive signal and a third set of complex frequency points $\lambda_{3A}$, $\lambda_{3B}$ of a third spectral receive signal have been calculated previously from their respective received time domain signals. Therein, points $\lambda_{1A}$, $\lambda_{2A}$ and $\lambda_{3A}$ have been assigned to the reference signal complex frequency point $\lambda_{ref,A}$, and points $\lambda_{1B}$, $\lambda_{2B}$ and $\lambda_{3B}$ have been assigned to the reference signal complex frequency point $\lambda_{ref,B}$ for signal detection. For the update of the hypothetical spectral receive signal (or reference signal), the mean value of $\lambda_{1A}$, $\lambda_{2A}$ and $\lambda_{3A}$ is calculated, resulting in an updated reference signal complex frequency point $\lambda_{U,ref,A}$, which may replace complex frequency point $\lambda_{ref,A}$, in a future signal detection process, and likewise an updated reference signal complex frequency point $\lambda_{U,ref,B}$, which may replace complex frequency point $\lambda_{ref,B}$.

There may, however, be multiple reference signals, and hence a multitude of complex frequency point sets ($\lambda_{ref,A}$, $\lambda_{ref,B}$). The decision in Fig. 4 is assumed to have revealed $\lambda_{ref,A}$ and $\lambda_{ref,B}$ as the closest match (e.g. determined via the Euclidean distance) for all three spectral receive signals.

In other words, the detection module is configured to detect the transmit signal as the respective hypothetical transmit signal based on an Euclidean distance between the spectral receive signal and an updated hypothetical spectral receive signal corresponding to the respective hypothetical transmit signal. In some further embodiments the detection module is further configured to detect the transmit signal as a first hypothetical transmit receive signal if an Euclidean distance between the spectral receive signal (e.g. $\lambda_{1A}$) and the first hypothetical spectral receive signal (e.g. $\lambda_{ref,A}$) corresponding to first hypothetical transmit receive signal is smaller than an Euclidean distance between the spectral receive signal and a second hypothetical spectral receive signal. In some further embodiments a first and a second updated hypothetical spectral receive signal (e.g. $\lambda_{U,ref,A}$) may be used for the comparison of Euclidean distance.

In one or more other embodiments the spectral receive signal may, however, comprise a number of complex frequency points which differs from a number of complex frequency points of the reference signal. For instance, the spectral receive signal may comprise three complex frequency points, whereas the reference signal may comprise four. In this exemplary case the decision may comprise one or more additional rules. These rules may for example introduce a factor for a calculation related to signal agreement, the factor being based on a number value of the difference in complex frequency points, or even exclude reference signals with a differing number of complex frequency points.

In one or more embodiments the update module is configured to receive at least one previous spectral receive signal portion corresponding to one or more complex frequencies in the upper or lower complex half-plane that led to a detection of the transmit signal corresponding to the hypothetical spectral receive signal. Therein, the previous spectral receive signal portion comprises a previously updated hypothetical spectral receive signal. In other words, an continuous, repeated or iterative update may be possible. Therein, a complex frequency value of an updated hypothetical spectral receive signal (e.g. $\lambda_{U,ref,A}$) may be used in combination with further spectral received signals to calculate a further mean value. It may thus be possible to track drifts of channel characteristics due to the continuous update of the reference values to the last N received signal samples.

In some embodiments the update module is configured to receive at least one previous spectral receive signal portion corresponding to one or more complex frequencies in the upper or lower complex half-plane that led to a detection of the transmit signal corresponding to the hypothetical spectral receive signal as a predetermined value. In other words, the predetermined values may be part of a training sequence, or may also be entered manually as default values. Further, as initial starting value for $\lambda_{j,ref-i}$, a known trainings sequence may be used. Alternatively, the detection scheme of Fig. 2 may be used to provide first guesses of $\lambda_{j,ref-i}$, which may offer a possibility to obtain decisions with a reduced amount of errors.

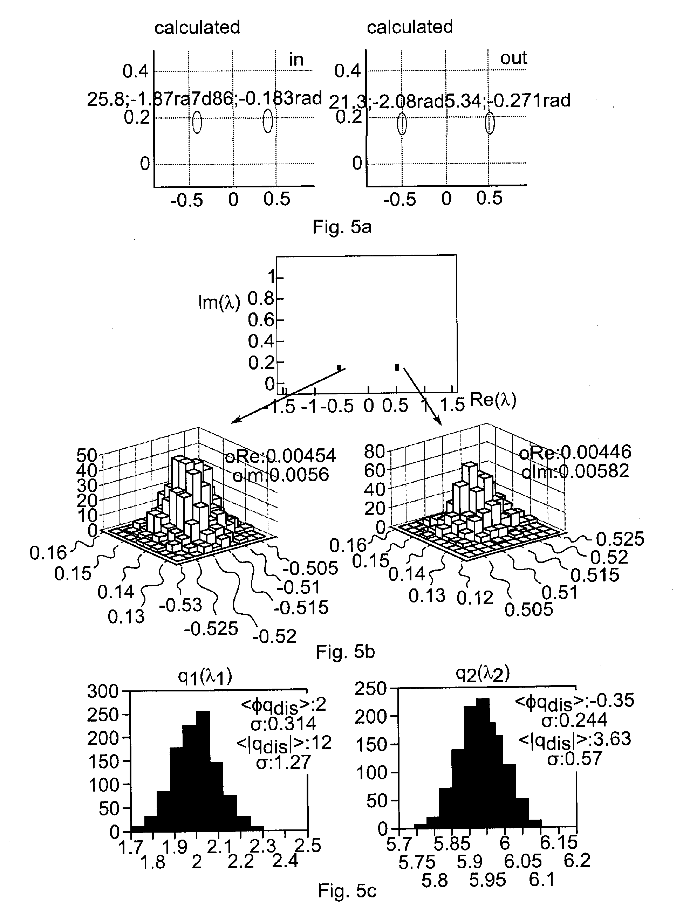

This is illustrated by Fig. 5a, which shows the received spectral points $\lambda_{j,ref-i}$ labeled by 'received' and the calculated points labeled by 'calculated' and obtained by multiplication of simulated transmitted spectra with an all-pass filter H (see also middle part in Fig.2). Even though the received and calculated points are not identical, they may be similar, e.g. deviate by no more than a predefined Euclidean distance. Fig. 5b shows 3D histograms of $\lambda_j$ values, or, in other words, a 3D visualization of the received spectral points of Fig. 5a. The x- and y-axes each display an interval spanning 0.03 units in complex frequency space, and the z-axis an amplitude $q_d(\lambda_j)$, respectively. It may be seen from Fig. 5b, that the spectral points correspond to a local maximum of the amplitude $q_d(\lambda_j)$. Fig. 5c shows histograms of phases of complex amplitudes $q_d$ at frequencies $\lambda_j$.

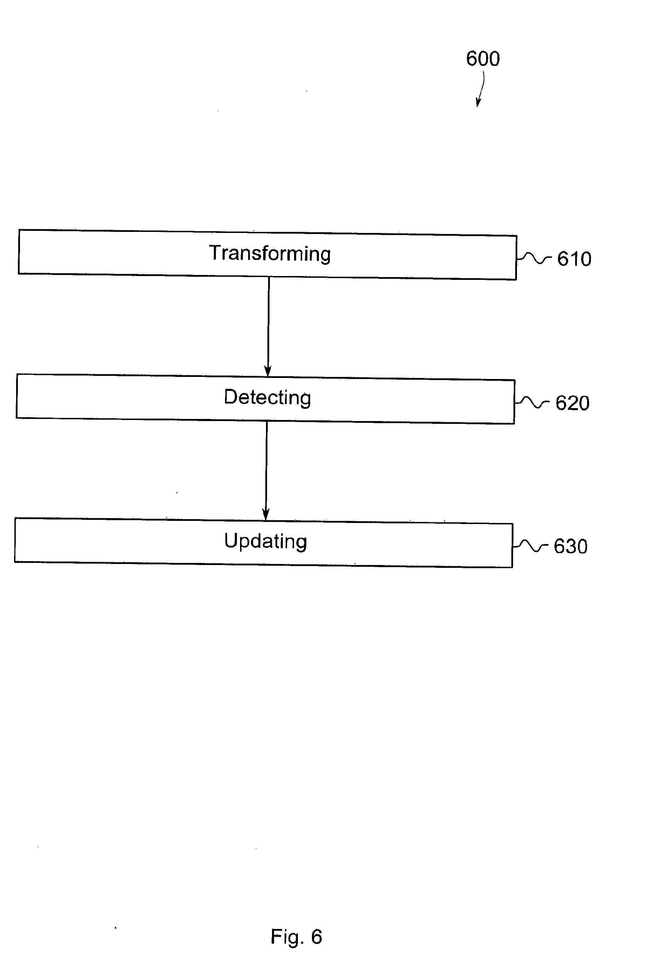

Fig. 6 shows a block diagram of an embodiment of a method 600 for a receiver. Method 600 comprises a transforming 610 of a received time domain signal to a spectral receive signal. Method 600 further comprises a detecting 620 of a transmit signal based on a comparison of the spectral receive signal with at least one of a plurality of hypothetical spectral receive signals. A hypothetical spectral receive signal corresponds to a respective hypothetical transmit signal. Method 600 also comprises an updating 630 of a hypothetical spectral receive signal of the plurality based on at least one previous spectral receive signal that led to a detection of the transmit signal corresponding to the hypothetical spectral receive signal. An agreement between a signal hypothesis and a signal actually received by the receiver may thus be improved, using previously occurring distortion effects that have affected previous transmissions. Higher exactness in receiver-sided signal detection may hence be achieved.

In the nonlinear signal spectrum the precision of the discrete spectrum part (frequency and amplitude of solitons e.g. of higher order) may be stable under noise. However, propagation calculated in the frequency domain may deviate to some extend from measured results. The aforementioned embodiments may offer a possibility to provide a trainings sequence based channel estimation for these discrete frequencies points and their amplitudes.

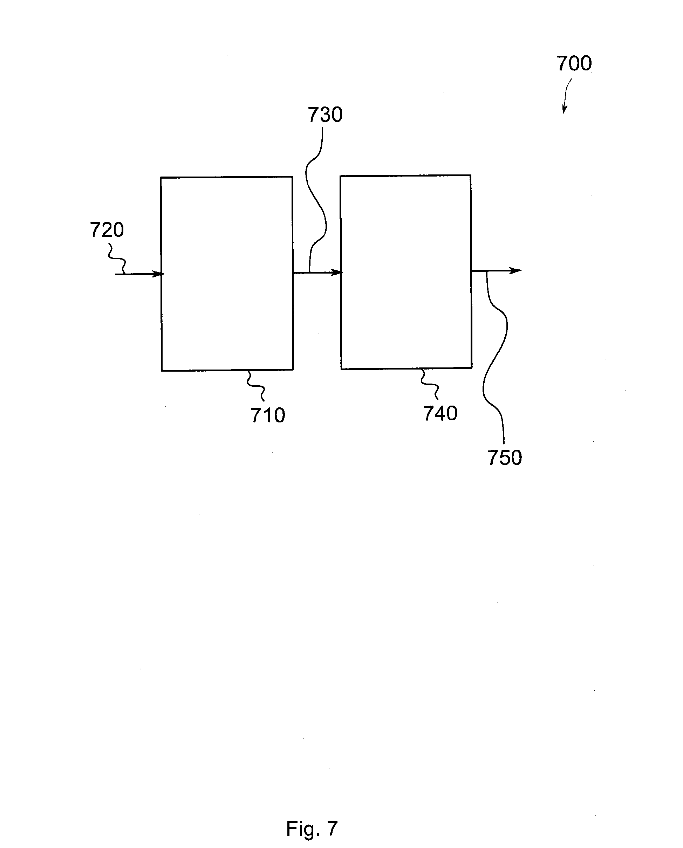

According to a further aspect, embodiments provide a signal transformation circuitry 700, which is schematically depicted in Fig. 7. Signal transformation circuitry 700 comprises a first transform module 710 configured to transform a time domain signal 720 to a complex frequency domain signal 730. Signal transformation circuitry 700 further comprises a second transform module 740 configured to perform an inverse transformation based on a non-zero imaginary part of complex frequency domain signal 730 to obtain a modified time domain signal 750. A better use of existing signal power, e.g. in optical applications, may thus be achieved. Furthermore, this may enable a possibility for signal preprocessing, e.g. for a transmitter, that may lessen distortion effects during transmission and hence simplify signal detection on a receiver side.

Signal transformation circuitry 300 may be suitable for a transmitter. Time domain signal 310 may hence be a transmit signal. First transform module 710 and second transform module 740 may in a different embodiment be implemented as a common physical unit, for instance a microprocessor or any other programmable hardware component, or also comprise one another. In some embodiments, signal transformation circuitry 700 may be comprised by a transmitter. Said transmitter may have a transmission interface configured to provide modified time domain signal 750 as a transmit signal. The transmission interface is in one embodiment coupled to an optical transmission channel, e.g. a fiber, and hence the transmit signal may be an optical signal. In a different embodiment, the signals may just as well be electronic signals.

Complex frequency domain signal 730 may comprise a real- or complex-valued amplitude plotted against complex-valued frequency. That is to say, complex frequency domain signal 730 may comprise one or more couples of values, each couple formed by a complex frequency and a real- or complex-valued amplitude assigned to each other. Time domain signal 720 and modified time domain signal 750 may, accordingly, comprise a real- or complex-valued amplitude plotted against time. Furthermore, time domain signal 720 may be limited and/or predetermined in bandwidth.

In an embodiment, second transform module 740 is configured to perform an inverse transformation taking into account only a non-zero imaginary part of complex frequency domain signal 730 to obtain a modified time domain signal 750. As stated above, complex frequency domain signal 730 may comprise one or more complex frequencies. Said one or more complex frequencies may result directly from the transformation performed by first transform module 710. In other words, first transform module 710 is further configured to obtain the one or more complex frequencies in the upper or lower complex half-plane from the transformation of time domain signal 720.

Second transform module 740 is in some embodiments configured to perform the inverse transformation based on one or more complex frequencies in the upper or lower complex half-plane. In an embodiment, Second transform module 740 is even configured to perform the inverse transformation taking into account only one or more complex frequencies in the upper or lower complex half-plane. In other words, a part of the complex space may be excluded from the inverse transformation. This part may comprise complex frequencies with an imaginary part equal to zero, or the real axis. In another embodiment, said part of complex space may comprise a predetermined interval around the real axis. Second transform module 740 may then perform the transformation if (or only if) an imaginary part of one or more complex frequencies is outside the interval, or if an absolute value of the imaginary part exceeds a predetermined threshold.

One possible application for signal transformation circuitry 700 relates to a communication system, which further comprises one of the aforementioned embodiments related to receiver 300 (compare Fig. 3). Therein, a receiver-sided signal detection process may disregard complex frequencies having an imaginary part equal to zero and amplitude values assigned to the former. This portion of complex frequency domain signal 730 corresponds e.g. to the continuous spectrum $q_c(\lambda)$ in the right-hand insets of Figs. 1 and 2. Disregarding this portion may be motivated due to a relative amount of power in this portion, which is reduced when signal power of symbols is increased. A further motivation may arise from an increased variance of the continuous spectrum $q_c(\lambda)$ close to soliton propagation which may degrade decisions based on the continuous spectrum. In some embodiments signals are created, or, in other words, time domain signals 720 are modified in a way that the modified time domain signal 750 may be limited in bandwidth, but carries low or no energy in the continuous spectrum $q_c(\lambda)$.

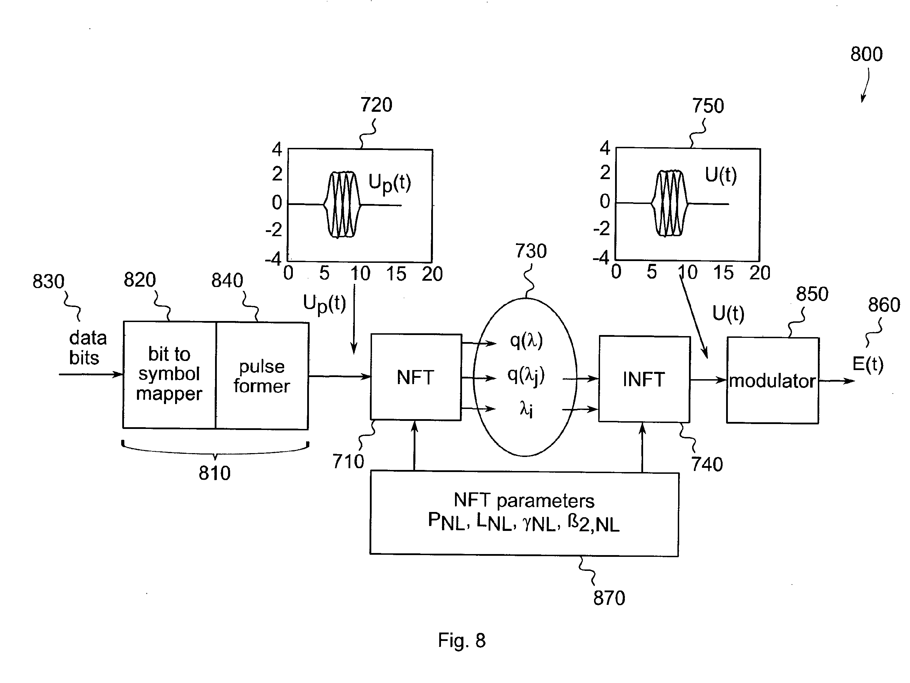

Said modification may in one embodiment be accomplished by signal transformation circuitry 800 shown in Fig. 8. Components therein corresponding to like components in Fig. 7 are not explained again. In the following section, differences to Fig. 7 are rather lined out.

A signal generator 810 comprises a bit-to-symbol mapper 820 to receive a given configuration of data bits 830 and a pulse former 840 to generate time domain signal 720, which is illustrated herein an amplitude-versus-time diagram. First transform module 710 is in some embodiments configured to transform time domain signal 720 to complex frequency domain signal 730 using a nonlinear transformation. The nonlinear transformation may in further embodiments be a nonlinear Fourier transform (NFT), as shown in Fig. 8. Alternatively, in other embodiments, a discrete Fourier transform, fast Fourier transform or any linear transformation may just as well be used.

Second transform module 740 is in some embodiments configured to transform complex frequency domain signal 730 at least partially to modified time domain signal 720 using an inverse nonlinear transformation. The inverse nonlinear transformation may in further embodiments be a corresponding inverse operation to the transformation performed by first transform module 710. Accordingly, in Fig. 8, the inverse nonlinear transformation is an inverse nonlinear Fourier transform (INFT). In other embodiments, an inverse operation to a discrete Fourier transform, fast Fourier transform or any linear transformation may for example be used as well.

The NFT and INFT performed in Fig. 8 may invoke a set of parameters 870 related to a transmission channel, for example the dispersion coefficient of an ideal fiber channel $\beta_{2,NL}$, the nonlinear coefficient of the fiber channel $\gamma_{NL}$,

the length of the fiber channel $L_{NL}$, and the mean signal power $P_{NL}$.

Modified time domain signal 750 is further provided to a modulator 850 by second transform module 740. Modulator 850 is configured to provide a modulated modified time domain signal 860.

In Fig. 8, second transform module 740 is configured to set a value (e.g. amplitude) of complex frequency domain signal 730 to zero if a complex frequency assigned to the value (e.g. amplitude) of complex frequency domain signal 730 is a real number value, or if an imaginary part of the complex frequency lies within a predetermined interval comprising zero. That is, the discrete part of the spectrum ($\lambda_j$ and $q_d(\lambda_j)$) is used unchanged for the inverse transformation, while the continuous part ($q_c(\lambda)$) is set to 0 before the inverse transformation.

For the inverse transformation, complex frequencies $\lambda_j$ with an imaginary part different from zero and amplitudes $q_d(\lambda_j)$ that are assigned to said complex frequencies or equal zero may then be used. As already stated above, complex frequency domain signal 730 may be depicted in a 3D diagram as a real- or complex-valued amplitude plotted against complex-valued frequency (see e.g. Fig. 5b for comparison). The amplitude may exhibit at least a local maximum or pole assigned to a complex frequency with an imaginary part larger than zero. The complex frequency may correspond to an eigenvalue related to the transformation. The local maximum or pole corresponds to a soliton of the modified time domain signal. In some embodiments, at least 50 per cent of a signal power of modified time domain signal 750 is caused by solitons. On the other hand, less than 5 per cent of the modified time domain signal is caused by a fraction of complex frequency domain signal 730, which is assigned to a complex frequency with an imaginary part equal to zero. That is to say, less than 5 per cent or even none of the signal power originates from the continuous portion $q_c(\lambda)$ of complex frequency domain signal 730. It is thus possible to provide a preprocessed signal for transmission in a way that may simplify signal detection on a receiver side due to better agreement of complex frequency points of the received signal and a reference signal.

Even though INFT appears to be prohibitively complex, in INFT options may be implemented for discrete spectral components ($q_d(\lambda_j)$ and $\lambda_j$) with tolerable complexity for digital signal processing (DSP). In one embodiment, the INFT may correspond to a Darboux transformation (DT), whose equations are presented in the following.

The discrete spectrum $\lambda_j$ and $q_d(\lambda_j)$ (i=1...N) shall be transformed to the time domain signal q(t). In DT there are two update rules:

(E) for an eigenvector $v=(v_1,v_2)^T$ and
(S) for a signal q.

The eigenvector update rule may be based on the equations:

$$v_1(t,\lambda_j,q^{(k+1)}) = -\left\{(\lambda_j - \lambda_{k+1})|v_1(t,\lambda_{k+1},q^{(k)})|^2 + (\lambda_j - \lambda_{k+1}^*)|v_2(t,\lambda_{k+1},q^{(k)})|^2\right\}v_1(t,\lambda_j,q^{(k)})$$
$$+(\lambda_{k+1}^* - \lambda_{k+1})v_1(t,\lambda_{k+1},q^{(k)})v_2^*(t,\lambda_{k+1},q^{(k)})v_2(t,\lambda_j,q^{(k)}),$$

$$v_2(t,\lambda_j,q^{(k+1)}) = -\left\{(\lambda_j - \lambda_{k+1}^*)|v_1(t,\lambda_{k+1},q^{(k)})|^2 + (\lambda_j - \lambda_{k+1})|v_2(t,\lambda_{k+1},q^{(k)})|^2\right\}v_2(t,\lambda_j,q^{(k+1)})$$
$$-(\lambda_{k+1} - \lambda_{k+1}^*)v_1^*(t,\lambda_{k+1},q^{(k)})v_2(t,\lambda_{k+1},q^{(k)})v_1(t,\lambda_j,q^{(k)}),$$

for $k$ = 1,...,$N$ and $j$ = $k$,...,$N$.

The signal update rule may be based on the equation:

$$q^{(k+1)} = q^{(k)} - 2j(\lambda_{k+1}^* - \lambda_{k+1}) \cdot \frac{v_1(t,\lambda_{k+1},q^{(k)})v_2^*(t,\lambda_{k+1},q^{(k)})}{\|v(t,\lambda_{k+1},q^{(k)})\|^2}$$

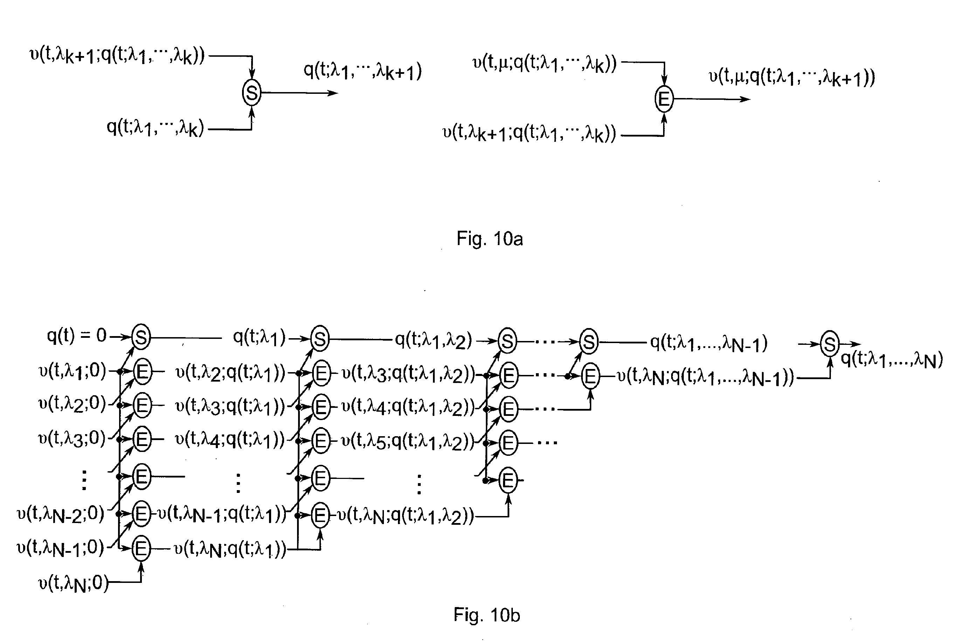

This iterative use of this densely written set of formulas may be decomposed by summarizing the equations above in two circles: (S=signal) and (E=eigenvector), as is shown in Fig. 10a. It allows describing the successive adding of the discrete spectral components by moving from the left to the right, as is shown in Fig. 10b. The non-canonical eigenvectors $v(t, \lambda_j)$ may be written as $[A_j e^{-j\lambda_j t}, B_j e^{j\lambda_j t}]^T$. The coefficients $A_j$ and $B_j$ control the spectral amplitudes and the shape of the pulses, and may be determined from the discrete amplitude $q_d(\lambda_j)$. For a single soliton, $A_j = \exp(j\angle q_d(\lambda_j))$ and Bj = $|q_d(\lambda_j)|$, wherein j is the complex number.

Finally, the signal q(t;...) at the right side is the requested time domain signal U(t)=q(t;...) with the spectrum ($\lambda_j$ and $q_d(\lambda_j)$).

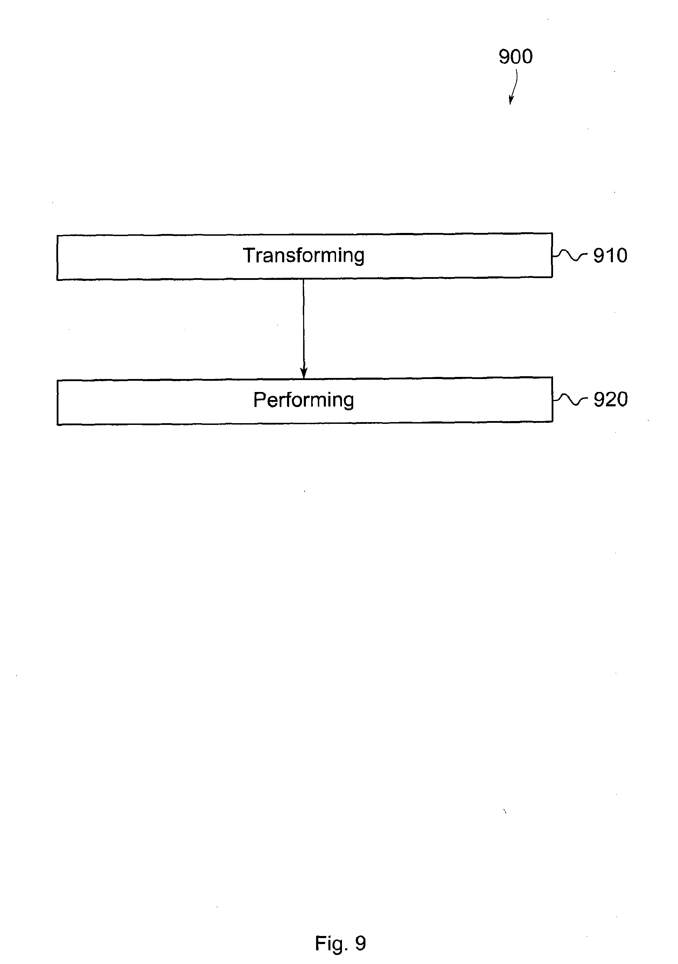

Fig. 9 further shows a block diagram of an embodiment of a method 900 for a signal transformation circuitry. Method 900 comprises a transforming 910 of a time domain transmit signal to a complex frequency domain transmit signal. Method 900 further comprises a performing 920 of an inverse transformation based on a non-zero imaginary part of the complex frequency domain signal to obtain a modified time domain signal.

At increasing signal power, which might be a preferable operation regime of nonlinear transmission, discrete spectral components may start to dominate. Embodiments may improve or even optimize the sensitivity of these schemes. With increasing launch power (or increasing fiber nonlinearity) the relative amount of power in the continuous part of the nonlinear spectrum may decrease. Embodiments may present a possibility to preprocess a transmitter signal by transforming an initial bandwidth limited transmitter signal to a similar, refined transmitter signal, which contains only or dominantly discrete spectral components (higher order solitons). These exemplary spectra may possibly be more efficiently detected by a receiver, for example receiver 300 presented in the embodiment of Fig. 3.

Some embodiments are related to an optical communication system. The optical communication system may comprise an optical transmission channel, for instance an optical fiber, and a transmitter comprising the aforementioned signal transformation circuitry. The signal transformation circuitry may be coupled to the optical fiber. Furthermore, the optical communication system may comprise the aforementioned receiver, and the receiver may be coupled to the optical fiber.

Turning again to Fig. 8, the set of channel parameters 870 ($P_{NL}$, $L_{NL}$, $\gamma_{NL}$, $\beta_{2,NL}$) of the NFT are shown in the bottom center box and are also used in the equations in left box of Fig.1. These channel parameters ($P_{NL}$, $L_{NL}$, $\gamma_{NL}$, $\beta_{2,NL}$) of the NFT therein may correspond to a physical fiber and signal parameters in the case of an idealized lossless fiber with a loss $\alpha$ = 0dB/km. For a realistic fiber with 0.2-dB/km loss and multi span links, these values may be unknown.

Using a realistic fiber with $\alpha$ = 0.2-dB/km loss confirmed, fitting of the spectra may be improved by several options. According to a first exemplary option the nonlinear coefficient $\gamma_{NL}$ and the dispersion coefficient $\beta_{2,NL}$ are kept at values that are true for the fiber used, or deviate by no more than 5 per cent from these (e.g. 1.15 $km^{-1}W^{-1}$ and 17 ps/nm/km, respectively). According to a second exemplary option the fiber length $L_{NL}$ is set to the total link length equaling a sum of fiber spans ($L_{NL}=\Sigma L_{span}$), or, in other words, the fiber is divided into a multitude of spans along its length. According to a third exemplary option the NFT power $P_{NL}$ is set equal to $P*L_{eff}/L_{span}$. This represents a reduced value which may introduce a nonlinear phase modulation in a lossless fiber, which is essentially identical to a nonlinear phase modulation induced by a launch power P in a fiber where loss may occur. For example, if all spans in the link are identical, an effective fiber length may be determined based on the equation:

$$L_{eff} = \int_0^L e^{(-\alpha z)} dz = \frac{1}{\alpha}\left[1 - e^{(-\alpha L)}\right]$$

For example, $L_{eff} \approx 1/\alpha \approx 22km$, for L»20km. In other words, values of channel-related parameters, which are used for the mathematical NFT operation, may be quantified in some embodiments. This embodiment may be helpful for some schemes applying NFT in a realistic fiber link, like for example the previously presented embodiments.

A further embodiment is a computer readable storage medium storing instructions which, when executed by a computer, cause the computer to implement one of the methods described herein. Other embodiments are a computer program or a computer program product having a program code for performing any one of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the present disclosure. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

Moreover, any functional block described herein may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. Receiver (300), comprising:

    a transform module (310) configured to transform a received time domain signal (320) to a spectral receive signal (330);
    a detection module (340) configured to detect a transmit signal based on a comparison of the spectral receive signal (330) with at least one of a plurality of hypothetical spectral receive signals, a hypothetical spectral receive signal corresponding to a respective hypothetical transmit signal; and
    an update module (350) configured to update a hypothetical spectral receive signal of the plurality based on at least one previous spectral receive signal (360) that led to a detection of the transmit signal corresponding to the hypothetical spectral receive signal.

2. The receiver (300) of claim 1, wherein the spectral receive signal (330) comprises one or more complex frequencies, and wherein the update module (350) is configured to update a portion of the hypothetical spectral receive signal corresponding to one or more complex frequencies in the upper or lower complex half-plane based on at least one previous spectral receive signal portion corresponding to one or more complex frequencies in the upper or lower complex half-plane that led to a detection of the transmit signal corresponding to the hypothetical spectral receive signal.

3. The receiver (300) of claim 1, wherein the update module (350) is configured to update a portion of the hypothetical spectral receive signal corresponding to one or more complex frequencies in the upper or lower complex half-plane based on a mean value of at least two previous spectral receive signal portions corresponding to one or more complex frequencies in the upper or lower complex half-plane that led to a detection of the transmit signal corresponding to the hypothetical spectral receive signal.

4. The receiver (300) of claim 1, further comprising a storage module (380) configured to store an information related to the at least one previous spectral receive signal (360) that led to a detection of the transmit signal corresponding to the hypothetical spectral receive signal.

5. The receiver (300) of claim 1, wherein the update module (350) is configured to receive at least one previous spectral receive signal portion corresponding to one or more complex frequencies in the upper or lower complex half-plane that led to a detection of the transmit signal corresponding to the hypothetical spectral receive signal, wherein the at least one previous spectral receive signal portion comprises a previously updated hypothetical spectral receive signal (370).

6. The receiver (300) of claim 1, wherein the update module (350) is configured to receive at least one previous spectral receive signal portion corresponding to one or more complex frequencies in the upper or lower complex half-plane that led to a detection of the transmit signal corresponding to the hypothetical spectral receive signal as a predetermined value.

7. The receiver (300) of claim 1, wherein the transform module (310) is configured to transform the received time domain signal (320) to the spectral receive signal (330) using a nonlinear Fourier transform.

8. The receiver (300) of claim 1, wherein the detection module (340) is further configured to detect the transmit signal as the respective hypothetical transmit signal based on an Euclidean distance between the spectral receive signal (330) and an updated hypothetical spectral receive signal (370) corresponding to the respective hypothetical transmit signal.

9. The receiver (300) of claim 1, further comprising a reception interface (390) configured to receive the time domain signal (320).

10. The receiver (300) of claim 9, wherein the reception interface (390) is coupled to an optical transmission channel, and wherein the received time domain signal (320) is an optical signal.

11. Method (600) for a receiver, comprising:

transforming (610) a received time domain signal to a spectral receive signal;
detecting (620) a transmit signal based on a comparison of the spectral receive signal with at least one of a plurality of hypothetical spectral receive signals, a hypothetical spectral receive signal corresponding to a respective hypothetical transmit signal; and
updating (630) a hypothetical spectral receive signal of the plurality based on at least one previous spectral receive signal that led to a detection of the transmit signal corresponding to the hypothetical spectral receive signal.

12. A computer program having a program code for performing the method of claim 11, when the computer program is executed on a computer or processor.

**Amended claims in accordance with Rule 137(2) EPC.**

1. Receiver (300), comprising:

a transform module (310) configured to transform, using a nonlinear Fourier transform, a received time domain signal (320) to a spectral receive signal (330) comprising a real-valued spectral part comprising real frequencies and a complex-valued spectral part comprising complex frequencies;
a detection module (340) configured to detect a transmit signal at least based on a comparison of the complex frequency of the spectral receive signal (330) with a complex frequency of at least one of a plurality of hypothetical spectral receive signals, a hypothetical spectral receive signal comprising a real-valued spectral part comprising real frequencies and a complex-valued spectral part comprising complex frequencies, and corresponding to a respective hypothetical transmit signal; and
an update module (350) configured to update a hypothetical spectral receive signal of the plurality based on at least one previous spectral receive signal (360) that led to a detection of the transmit signal corresponding to the hypothetical spectral receive signal.

2. The receiver (300) of claim 1, wherein the spectral receive signal (330) comprises one or more complex frequencies, and wherein the update module (350) is configured to update a portion of the hypothetical spectral receive signal corresponding to one or more complex frequencies in the upper or lower complex half-plane based on at least one previous spectral receive signal portion corresponding to one or more complex frequencies in the upper or lower complex half-plane that led to a detection of the transmit signal corresponding to the hypothetical spectral receive signal.

3. The receiver (300) of claim 1, wherein the update module (350) is configured to update a portion of the hypothetical spectral receive signal corresponding to one or more complex frequencies in the upper or lower complex half-plane based on a mean value of at least two previous spectral receive signal portions corresponding to one or more complex frequencies in the upper or lower complex half-plane that led to a detection of the transmit signal corresponding to the hypothetical spectral receive signal.

4. The receiver (300) of claim 1, further comprising a storage module (380) configured to store an information related to the at least one previous spectral receive signal (360) that led to a detection of the transmit signal corresponding to the hypothetical spectral receive signal.

5. The receiver (300) of claim 1, wherein the update module (350) is configured to receive at least one previous spectral receive signal portion corresponding to one or more complex frequencies in the upper or lower complex half-plane that led to a detection of the transmit signal corresponding to the hypothetical spectral receive signal, wherein the at least one previous spectral receive signal portion comprises a previously updated hypothetical spectral receive signal (370).

6. The receiver (300) of claim 1, wherein the update module (350) is configured to receive at least one previous spectral receive signal portion corresponding to one or more complex frequencies in the upper or lower complex half-plane that led to a detection of the transmit signal corresponding to the hypothetical spectral receive signal as a predetermined value.

7. The receiver (300) of claim 1, wherein the detection module (340) is further configured to detect the transmit signal as the respective hypothetical transmit signal based on an Euclidean distance between the spectral receive signal (330) and an updated hypothetical spectral receive signal (370) corresponding to the respective hypothetical transmit signal.

8. The receiver (300) of claim 1, further comprising a reception interface (390) configured to receive the time domain signal (320).

9. The receiver (300) of claim 8, wherein the reception interface (390) is coupled to an optical transmission channel, and wherein the received time domain signal (320) is an optical signal.

10. Method (600) for a receiver, comprising:

transforming (610), using a nonlinear Fourier transform, a received time domain signal to a spectral receive signal comprising a real-valued spectral part comprising real frequencies and a complex-valued spectral part comprising complex frequencies;
detecting (620) a transmit signal at least based on a comparison of the complex frequency of the spectral receive signal with a complex frequency of at least one of a plurality of hypothetical spectral receive signals, a hypothetical spectral receive signal comprising a real-valued spectral part comprising real frequencies and a complex-valued spectral part comprising complex frequencies, and corresponding to a respective hypothetical transmit signal; and
updating (630) a hypothetical spectral receive signal of the plurality based on at least one previous spectral receive signal that led to a detection of the transmit signal corresponding to the hypothetical spectral receive signal.

11. A computer program having a program code for performing the method of claim 10, when the computer program is executed on a computer or processor.

$E(t')$

$t'$

$\lambda$

NFT

$a(\lambda)$
$b(\lambda)$

$(1\text{-}1)\{$ $t = t' / \sqrt{|\beta_{2,NL}| L_{NL}/2}$

$(1\text{-}2)\{$ $Q(t) = \sqrt{\dfrac{P_{NL}}{\langle |E|^2 \rangle \cdot 2/\gamma_{NL} L_{NL}}} \cdot E(t)$

$Q(k \cdot \Delta t)$

$\ln|a|)$

$\ln|b|)$

$da/d\lambda$

$q(\lambda) = \dfrac{b(\lambda)}{a(\lambda)}$ (1-6)

$q(\lambda_i) = \dfrac{b(\lambda_i)}{da(\lambda_i)/d\lambda}$

(1-7)

$|q(\lambda)|$

$\lambda_i$

$Im(\lambda_i)$

$Re(\lambda_i)$

$\begin{pmatrix} v_1 \\ v_2 \end{pmatrix}_{(k+1)} = \begin{pmatrix} \exp(-j\lambda\Delta t) & Q(k) \\ -Q(k)^* & \exp(j\lambda\Delta t) \end{pmatrix} \begin{pmatrix} v_1 \\ v_2 \end{pmatrix}_{(k)} \longrightarrow$

$a(\lambda) = v_1(N)\, e^{j\lambda t(N)}$ }(1-4)

$b(\lambda) = v_2(N) \cdot e^{-j\lambda t(N)}$ }(1-5)

(1-3)

Fig. 1

EP 3 035 564 A1

Fig. 2

EP 3 035 564 A1

Fig. 3

Fig. 4

calculated                    calculated

Fig. 5a

Fig. 5b

Fig. 5c

600

Transforming ~ 610

Detecting ~ 620

Updating ~ 630

Fig. 6

700

730

720

710

740

750

Fig. 7

Fig. 8

EP 3 035 564 A1

900

| Transforming | ~ 910 |

| Performing | ~ 920 |

Fig. 9

$v(t,\lambda_{k+1};q(t;\lambda_1,\cdots,\lambda_k))$ →(S)→ $q(t;\lambda_1,\cdots,\lambda_{k+1})$

$q(t;\lambda_1,\cdots,\lambda_k)$

$v(t,\mu;q(t;\lambda_1,\cdots,\lambda_k))$ →(E)→ $v(t,\mu;q(t;\lambda_1,\cdots,\lambda_{k+1}))$

$v(t,\lambda_{k+1};q(t;\lambda_1,\cdots,\lambda_k))$

Fig. 10a

$q(t)=0$ →(S)— $q(t;\lambda_1)$ →(S)— $q(t;\lambda_1,\lambda_2)$ →(S)—$\cdots$→(S)— $q(t;\lambda_1,\ldots,\lambda_{N-1})$ →(S)→ $q(t;\lambda_1,\ldots,\lambda_N)$

$v(t,\lambda_1;0)$ —(E)— $v(t,\lambda_2;q(t;\lambda_1))$ —(E)— $v(t,\lambda_3;q(t;\lambda_1,\lambda_2))$ —(E)—$\cdots$—(E)— $v(t,\lambda_N;q(t;\lambda_1,\ldots,\lambda_{N-1}))$

$v(t,\lambda_2;0)$ —(E)— $v(t,\lambda_3;q(t;\lambda_1))$ —(E)— $v(t,\lambda_4;q(t;\lambda_1,\lambda_2))$ —(E)—$\cdots$

$v(t,\lambda_3;0)$ —(E)— $v(t,\lambda_4;q(t;\lambda_1))$ —(E)— $v(t,\lambda_5;q(t;\lambda_1,\lambda_2))$ —(E)— $\cdots$

$\vdots$ (E) $\vdots$ (E) $\vdots$ (E)

$v(t,\lambda_{N-2};0)$ —(E)—$v(t,\lambda_{N-1};q(t;\lambda_1))$ —(E)—$v(t,\lambda_N;q(t;\lambda_1,\lambda_2))$

$v(t,\lambda_{N-1};0)$ —(E)— $v(t,\lambda_N;q(t;\lambda_1))$

$v(t,\lambda_N;0)$

Fig. 10b

Europäisches Patentamt

European Patent Office

Office européen des brevets

# EUROPEAN SEARCH REPORT

**Application Number**

EP 14 30 7101

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BULOW HENNING: "Experimental assessment of nonlinear fourier transformation based detection under fiber nonlinearity", 2014 THE EUROPEAN CONFERENCE ON OPTICAL COMMUNICATION (ECOC), SYSTEMATIC PARIS REGION SYSTEMS AND ICT CLUSTER, 21 September 2014 (2014-09-21), pages 1-3, XP032689351, DOI: 10.1109/ECOC.2014.6963840 [retrieved on 2014-11-20] * figure 2 * * the whole document * | 1-12 | INV. H04B10/60 H04L27/26 |
| X | YOUSEFI MANSOOR I ET AL: "Information Transmission Using the Nonlinear Fourier Transform, Part III: Spectrum Modulation", IEEE TRANSACTIONS ON INFORMATION THEORY, IEEE PRESS, USA, vol. 60, no. 7, 1 July 2014 (2014-07-01), pages 4346-4369, XP011550424, ISSN: 0018-9448, DOI: 10.1109/TIT.2014.2321155 [retrieved on 2014-06-12] * Section V.D * | 1-12 | TECHNICAL FIELDS SEARCHED (IPC) H04B H04L |

The present search report has been drawn up for all claims

| Place of search | Date of completion of the search | Examiner |
|---|---|---|
| Berlin | 24 March 2015 | Chave, Julien |

EPO FORM 1503 03.82 (P04C01)